# EUROPÄISCHE PATENTANMELDUNG

(11) **EP 2 336 724 A2**
(43) Veröffentlichungstag der Anmeldung: **22.06.2011**
(21) Anmeldenummer: 10194389.2
(22) Anmeldetag: 09.12.2010
(51) Int. Cl.: G01C 21/36

(54) **Verfahren zum Betrieb eines Navigationssystems**

(30) Priorität: 18.12.2009 DE 102009059085
(71) Anmelder: Navigon AG, 20251 Hamburg (DE)
(72) Erfinder: Katzer, Jochen, 91605, Gallmersgarten OT Bergtshofen (DE); Metz, Andreas, 97072, Würzburg (DE); Gaupp, Moritz, 97072, Würzburg (DE)
(74) Vertreter: von den Steinen, Axel

(57) **Zusammenfassung**

Die Erfindung betrifft ein Verfahren zum Betrieb eines Navigationssystems, umfassend eine Kartendatenspeichereinrichtung, in der ein geographisches Gebiet digital mittels einer Vielzahl Vektoren beschrieben ist, wobei die Vektoren zumindest teilweise einen Höhenwert umfassen, zumindest eine Positionsermittlungseinrichtung, mit der die aktuelle Position und/oder eine Positionsänderung des Navigationssystems bestimmt werden kann, eine Darstellungserzeugungseinheit, die zur Erzeugung graphisch darzustellender Inhalte, insbesondere graphischer Kartenansichten eines Teils des in der Kartendatenspeichereinrichtung gespeicherten geographischen Gebiets, eingerichtet ist, wobei die Darstellungserzeugungseinheit in zumindest einer Kartenansichtsbetriebsart betrieben werden kann, die eine dynamische Terrainkartenansicht (19, 20, 29, 30) erzeugt, zumindest eine, insbesondere optische, Anzeigeeinrichtung mittels der zumindest die Anzeige von mittels der Darstellungserzeugungseinheit erzeugten Terrainkartenansichten (19, 20, 29, 30) erfolgen kann,
mit folgenden Verfahrensschritten:
a) Laden zumindest eines Teils der Vektoren aus der Kartedatenspeichereinrichtung in die Darstellungserzeugungseinrichtung;
b) Umformen der Vektoren mittels der Darstellungserzeugungseinrichtung anhand von zumindest einer Umformungsvorschrift, wobei die Umformungsvorschriften von der Kartenansichtsbetriebsart abhängen, wobei für die Kartenansichtsbetriebsart zum Erzeugen einer vogelperspektivischen Terrainkartenansicht (19, 20, 29, 30) zumindest eine Umformungsvorschrift umfasst ist, bei der der Höhenwert von zumindest einem Teil der Vektoren in Abhängigkeit von zumindest einem dynamischen Korrekturfaktor verändert wird;
c) Ausgabe einer, auf Basis zumindest eines Teils der umgeformten Vektoren aufgebauten, Terrainkartenansicht mittels der Anzeigeeinrichtung.

## Beschreibung

Die Erfindung betrifft ein Verfahren zum Betrieb eines Navigationssystems nach der Lehre des Anspruchs 1.

Gattungsgemäße Navigationssysteme finden beispielsweise als mobile oder fest eingebaute Navigationsgeräte in Kraftfahrzeugen Verwendung und können vom Fahrer bzw. Benutzer dazu benutzt werden, seine Position zu bestimmen bzw. einen Fahrweg entlang einer vorgeplanten Route zwischen einem Startpunkt und einem Zielpunkt zu verfolgen. Dazu umfassen gattungsgemäße Navigationssysteme in aller Regel Anzeigeeinrichtungen, mit denen graphische Darstellungen an den Fahrer ausgegeben werden können. Dabei können die graphischen Darstellungen eine Vielzahl von Informationen und Anweisungen für den Fahrer enthalten. Üblicherweise nimmt dabei eine Kartenansicht einen nicht unerheblichen Teil der Anzeigeeinrichtung ein.

Die Kartenansichten sollen dem Benutzer die Orientierung erlauben und das Verfolgen des Fahrwegs entlang einer vorgeplanten Route erleichtern. Für die verschiedenen bekannten Darstellungsarten von Kartenansichten besteht ein verbindendes Merkmal darin, dass die Kartenansichten aus Kartendaten generiert werden, die in einer Kartendatenspeichereinrichtung gespeichert vorliegen.

Bei einer bekannten Darstellungsart von Kartenansichten handelt es sich beispielsweise um eine vogelperspektivische Terrainkartenansicht, bei der der Benutzer von einem virtuellen Blickpunkt oberhalb der Kartenoberfläche und hinter der Position des Fahrzeugs bzw. des Navigationssystems einen Kartenausschnitt aus einer dreidimensionalen Geländekarte unter einem bestimmten Blickwinkel und in einer bestimmten Blickrichtung betrachtet. Bei der Erzeugung einer quasi dreidimensionalen vogelperspektivischen Terrainkartenansicht, die ein dreidimensionales Gelände abbildet, ist die menschliche Wahrnehmung, insbesondere die menschliche Wahrnehmung von horizontalen bzw. vertikalen Distanzen, zu berücksichtigen. Mit anderen Worten ausgedrückt bedeutet dies, dass zur Erzeugung einer realistischen Terrainkartenansicht berücksichtigt werden muss, dass Distanzen in vertikaler Richtung optisch anders eingeschätzt werden als Distanzen, die in horizontaler Richtung verlaufen.

Beispielsweise wird ein 10m langes senkrechtes Objekt vom menschlichen Betrachter grundsätzlich auf eine Länge von 15 bis 20m geschätzt, wohingegen die Länge des gleichen Objekts in waagerechter Richtung korrekt geschätzt wird. Um dem Benutzer die Orientierung in einer Terrainkartenansicht zu erleichtern bzw. dem Benutzer zu ermöglichen, die Darstellung und die Inhalte der Terrainkartenansicht mit der Wirklichkeit zu verknüpfen und dadurch einen Informationsgewinn zu erhalten, ist es besonders wichtig, dass bei der Erzeugung und Darstellung von Terrainkartenansichten der vertikale Höhenverlauf richtig bzw. gemäß des menschlichen Empfindens scheinbar richtig wiedergegeben wird.

Dazu ist es nötig, die Kartendaten, die zur Erstellung der Terrainkartendaten benutzt werden und die in aller Regel eine maßstabsgetreue Abbildung des realen Terrains beschreiben, bei der Erzeugung von Terrainkartenansichten zu verändern. Dazu wird in bekannten Verfahren zur Erzeugung von Terrainkartenansichten eine Veränderung des Höhenwerts des jeweilig darzustellenden Terrains vorgenommen. Höhenwerte sind dabei Teil der digitalen Kartendaten, die den Geländeverlauf eines geographischen Gebiets beschreiben. Dazu sind diese Daten bzw. die Höhenwerte jeweils gegenüber einem festen Bezugssystem definiert. Beispielsweise kann das geographische Gebiet durch eine Vielzahl von Vektoren beschrieben werden, wobei eine Koordinate des jeweiligen Vektors den Höhenwert des zu beschreibenden Punkts des geographischen Gebiets bezogen auf ein Bezugssystem beschreibt.

Um eine, an die nicht maßstabsgetreue menschliche Wahrnehmung angepasste Terrainkartenansicht zu erzeugen, findet dabei im Stand der Technik eine Überhöhung der Höhenwerte der jeweils darzustellenden Kartendaten statt. Als Überhöhung wird dabei verstanden, dass Höhenunterschiede verstärkt werden. Bei bekannten Verfahren zur Erstellung und Ausgabe von quasi dreidimensionalen Terrainkartenansichten findet diese Überhöhung statisch und damit konstant für alle Höhenwerte statt.

Nachteilig an einer solchen statischen Überhöhung von Höhenwerten bzw. den damit erstellten und angezeigten Terrainkartenansichten ist, dass in Abhängigkeit von dem jeweils darzustellenden Terrain eine zu geringe oder zu starke Überhöhung stattfindet. Dies ist vor allem dem Umstand geschuldet, dass eine Vielzahl von Eigenschaften, die insbesondere auch durch die Betriebsart und den Bewegungszustand des Navigationssystems beeinflusst werden, Auswirkungen auf die jeweils zu erstellende und auszugebende Terrainkartenansicht haben.

Durch eine zu starke oder zu geringe Überhöhung der Höhenwerte bei der Erzeugung von Terrainkartenansichten wird jedoch die Identifizierbarkeit der Kartenansicht bzw. die Wiedererkennbarkeit der tatsächlichen Umgebung in der Kartenansicht negativ beeinflusst, wodurch der Informationsgewinn bzw. der Nutzen für den Bediener erschwert und/oder geschmälert wird.

Ausgehend von diesem Stand der Technik ist es deshalb Aufgabe der vorliegenden Erfindung, ein neues Verfahren zum Betrieb eines Navigationssystems vorzuschlagen, welches bei der Erzeugung von quasi dreidimensionalen Terrainkartenansichten eine flexible Anpassung der Kartendaten, aus denen die Terrainkartenansicht erzeugt wird, ermöglicht und dadurch die Wiedererkennbarkeit des in der Terrainkartenansicht dargestellten Geländes verbessert.

Diese Aufgabe wird durch ein Verfahren nach der Lehre des Anspruchs 1 gelöst.

Vorteilhafte Ausführungsformen der Erfindung sind Gegenstand der Unteransprüche.

Grundgedanke des erfindungsgemäßen Verfahrens ist es, bei der Erzeugung einer Terrainkartenansicht einen jeweils, für die jeweilige Terrainkartenansicht individuell bestimmten Korrekturfaktor, für die Anpassung der darzustellenden Höhenwerte zu berücksichtigen. Dabei ist der dynamische bzw. individuelle Korrekturfaktor an eine Vielzahl von Eigenschaften, die die zu erzeugende Terrainkartenansicht beeinflussen, angepasst, um das Erzeugen und Ausgeben möglichst realitätsnaher und gleichzeitig an die menschliche Wahrnehmung angepasster Terrainkartenansichten zu erlauben.

Im Einzelnen sieht das erfindungsgemäße Verfahren dabei vor, dass in einem ersten Verfahrensschritt Vektoren, die zur digitalen Beschreibung eines geographischen Gebiets und die zumindest teilweise einen Höhenwert umfassen, in einer Kartendatenspeichereinrichtung gespeichert sind, aus dieser Kartendatenspeichereinrichtung auszulesen und in eine Darstellungserzeugungseinheit einzulesen. Die Darstellungserzeugungseinheit ist dabei zur Erzeugung graphisch darzustellender Inhalte, insbesondere graphischer Kartenansichten eines Teils des in der Kartendatenspeichereinrichtung gespeicherten geographischen Gebiets, eingerichtet. Die Darstellungserzeugungseinheit kann dazu in zumindest einer Kartenansichtbetriebsart betrieben werden, die eine vogelperspektivische, insbesondere dynamische, Terrainkartenansicht erzeugt.

In einem zweiten Verfahrensschritt ist vorgesehen, dass die in die Darstellungserzeugungseinheit geladenen Vektoren mittels zumindest einer Umformungsvorschrift umgeformt werden, wobei die Umformungsvorschriften von der Kartenansichtsbetriebsart abhängen, und wobei für die Kartenansichtsbetriebsart zum Erzeugen einer vogelperspektivischen Terrainkartenansicht zumindest eine Umformungsvorschrift umfasst ist, bei der der Höhenwert von zumindest einem Teil der Vektoren in Abhängigkeit von zumindest einem dynamischen Korrekturfaktor verändert, also gegebenenfalls überhöht, wird.

In einem abschließenden Verfahrensschritt des erfindungsgemäßen Verfahrens erfolgt die Ausgabe einer, auf der Basis zumindest eines Teils der umgeformten Vektoren aufgebauten, Terrainkartenansicht mittels einer Anzeigeeinrichtung. Bei der Anzeigeeinrichtung handelt es sich dabei vorzugsweise um eine optische Anzeigeeinrichtung, mittels der zumindest die Anzeige von mittels der Darstellungserzeugungseinheit erzeugten Terrainkartenansichten erfolgen kann.

In einer Vielzahl der Fälle, in dem die Erzeugung und Ausgabe einer Terrainkartenansicht erfolgt, ist vorgesehen, dass die zu erzeugende und auszugebende Terrainkartenansicht die lokale Umgebung der aktuellen Position des Navigationssystems darstellen soll. Dies ist insbesondere während dem Verfolgen einer vorgeplanten Route der Fall. Die lokale Umgebung bzw. der Umfang der lokalen Umgebung der Terrainkartenansicht wird dabei vorteilhafterweise in Abhängigkeit von der Reisegeschwindigkeit gewählt, um ein vorausschauendes Navigieren bzw. Identifizieren der Terrainkartenansicht zu ermöglichen.

Deshalb sieht eine Ausführungsform des erfindungsgemäßen Verfahrens vor, dass das Laden eines Teils der Vektoren aus der Kartendatenspeichereinrichtung in die Darstellungserzeugungseinrichtung in Abhängigkeit von der aktuellen Position und/oder in Abhängigkeit von einer aktuellen Horizontalgeschwindigkeit erfolgt. Die Bestimmung der aktuellen Position des Navigationssystems kann dabei mittels einer Positionsermittlungseinrichtung des Navigationssystems erfolgen. Die aktuelle Horizontalgeschwindigkeit lässt sich beispielsweise mittels einer geeigneten Einrichtung aus der zeitlichen Änderung der jeweils zu einem bestimmten Zeitpunkt erfassten aktuellen Position bestimmen.

Für eine gut identifizierbare und/oder leicht interpretierbare Terrainkartenansicht spielen grundsätzlich zwei Faktoren eine Rolle. Bei dem ersten Faktor handelt es sich dabei um das jeweils darzustellende Gelände, welches durch seine geographischen, topographischen und anderen Eigenschaften bestimmt wird. Den zweiten Faktor bildet die Art bzw. die Eigenschaften in der bzw. mit denen das jeweilige Gelände dargestellt werden soll. Daraus ergibt sich als besonders vorteilhafte Ausgestaltung des erfindungsgemäßen Verfahrens, dass der Korrekturfaktor in Abhängigkeit von einem Darstellungsparameter und/oder einem Geländeparameter, insbesondere als Summe aus einem Darstellungsparameter und einem Geländeparameter, bestimmt wird.

Eine Verknüpfung der beiden Parameter durch eine Addition hat den Vorteil, dass die jeweiligen Einflüsse der beiden Parameter auf die Anpassung der Höhenwerte bzw. auf die Überhöhung der darzustellenden Kartendaten sowohl einen sich gegenseitig verstärkenden Charakter als auch einen sich gegenseitig vermindernden bzw. aufhebenden Charakter ausüben können. Dadurch wird gewährleistet, dass in jedem Fall eine angemessene dynamische Umformung der Vektoren bzw. deren Höhenwerte erfolgen kann.

Um eine Korrektur bzw. Anpassung der Höhenwerte einer darzustellenden bzw. zu erzeugenden Terrainkartenansicht in Abhängigkeit vom darzustellenden Gelände zu ermöglichen, muss dieses Gelände zunächst möglichst schnell, einfach und gleichzeitig möglichst präzise charakterisiert werden. Eine Charakterisierung bezüglich des Höhenverlaufs bzw. der Topographie des darzustellenden Geländes kann dabei besonders effizient erfolgen, wenn nicht alle, zur Erzeugung der Kartenansicht geladenen, Vektoren analysiert werden. Dementsprechend ist gemäß einer Ausführungsform vorgesehen, dass zumindest ein Teil der in die Darstellungserzeugungseinrichtung geladenen Vektoren als Geländestellvertretervektoren zusammengefasst werden.

Auf welche Art und Weise die Auswahl der Geländestellvertretervektoren erfolgt, ist grundsätzlich beliebig. Besonders vorteilhaft ist es aber, wenn die Geländestellvertretervektoren aufgrund einer bestimmten Korrelation zu der aktuellen Position des Navigationssystems und/oder aufgrund der Datenstrukturen, in denen die Kartendaten vorliegen, ausgewählt werden. Alternativ zur Auswahl bestimmter Vektoren als Geländestellvertretervektoren kann auch vorgesehen sein, dass alle in die Darstellungserzeugungseinrichtung geladenen Vektoren als Geländestellvertretervektoren verwendet werden. Dies erlaubt, wenn auch unter gestiegenem Aufwand, eine besonders präzise Charakterisierung des darzustellenden Geländes.

Für die Analyse der ausgewählten Geländestellvertretervektoren sind besonders deren Höhenwerte von Interesse. Diese geben Aufschluss über grundsätzliche Terraineigenschaften der zu erzeugenden bzw. darzustellenden Terrainkartenansicht. Die Analyse der Höhenwerte kann dabei beispielsweise zu dem Ergebnis führen, dass es sich bei dem darzustellenden Gelände um ein flaches oder hügeliges oder gar bergiges Gelände handelt. Um eine solche oder noch viel differenziertere Aussage treffen zu können, ist es deshalb besonders vorteilhaft, wenn zur Bestimmung des Geländeparameters zumindest eine statistische Auswertung der Höhenwerte der Geländestellvertretervektoren erfolgt.

Eine besonders aussagekräftige Analyse der Geländestellvertretervektoren wird erreicht, wenn der Mittelwert und/oder die Standardabweichung der Geländestellvertretervektoren berechnet werden. Dementsprechend ist es auch für die Bestimmung des Geländeparameters vorteilhaft, wenn zumindest der Mittelwert und/oder die Varianz und/oder die Standardabweichung der Höhenwerte der Geländestellvertretervektoren berechnet werden. Damit können neben der allgemeinen Höhenlage auch die Homogenität bzw. die relativen Höhenunterschiede des darzustellenden Geländes anhand zumindest eines Teils der Vektoren, auf denen die Erzeugung der Terrainkartenansicht basiert, abgeschätzt werden.

Insgesamt gilt, dass für ein Gelände, welches ein eher ausgeglichenes Höhenprofil aufweist, welches also umgangssprachlich als flach oder eben bezeichnet werden könnte, eine stärkere Überhöhung der Höhenwerte benötigt wird, als für ein ohnehin stark ausgeprägtes Höhenprofil. Dies ist dadurch gegeben, dass mittels des optischen Sinneseindrucks des Menschen auch in einem relativ flachen Gelände noch Höhenunterschiede wahrnehmbar sind. Mit anderen Worten ausgedrückt bedeutet dies, dass der Mensch insgesamt in der Lage ist, geringere Höhenunterschiede eines dreidimensionalen Profils wahrzunehmen, je flacher das Profil allgemein ist.

Deshalb ist es für das erfindungsgemäße Verfahren besonders von Vorteil, wenn der Geländeparameter mittels einer umgekehrten Proportionalität mit der Standardabweichung der Höhenwerte der Geländestellvertretervektoren verknüpft wird, wobei der Geländeparameter für einen Parameterbereich zwischen einem Minimalwert und einem Maximalwert definiert ist. Das heißt, dass, falls eine Anpassung der Höhenwerte lediglich aufgrund des Geländeparameters erfolgt, ein ausgeglichenes Höhenprofil aufgrund des Geländeparameters stark überhöht wird, wohingegen ein stark ausgeprägtes Höhenprofil kaum eine Überhöhung der Höhenwerte der Vektoren zur Darstellung der Terrainkartenansicht erfährt. Die Beschränkung des Geländeparameters auf einen Parameterbereich zwischen einem Minimalwert und einem Maximalwert ist sinnvoll, da dadurch für die menschliche Wahrnehmung unrealistisch erscheinende Auswirkungen der Anpassung der Höhenwerte aufgrund des Geländeparameters unterbunden werden können.

Alternativ dazu existieren jedoch auch Fälle, wenn auch nur sehr wenige, bei denen die Analyse der Höhenwerte der Geländestellvertretervektoren zumindest eine Aussetzung der dynamischen Bestimmung des Geländeparameters nahelegt. Mit anderen Worten ausgedrückt bedeutet dies, dass für spezielle Geländetypen eine dynamische Überhöhung der Höhenwerte insgesamt oder zumindest die auf den Geländeparameter zurückgehende Überhöhung deaktiviert wird, also eine maßstabsgetreue Abbildung der Höhenwerte erfolgt.

Diese seltenen Gelände lassen sich dabei ohne Mehraufwand bei der statistischen Auswertung der Geländestellvertretervektoren identifizieren. Als Beispiel sei hier ein Gelände genannt, welches sich in einer Küstenregion befindet, und dadurch ein Großteil der Vektoren die Meeresoberfläche mit einem Höhenwert von 0m beschreibt. Nach der vorgenannten Ausführungsform würde je nach Wahl der Geländestellvertretervektoren deren Standardabweichung einen sehr geringen Wert annehmen, dem wiederum ein maximaler Wert des Geländeparameters zugewiesen werden würde. Dadurch würde eine Überhöhung der Höhenwerte stark begünstigt werden. Jedoch ist für den Fall der Kartenansicht einer Küstenregion, wie auch bei anderen, entsprechenden Geländen, eine Überhöhung der Höhenwerte nicht wünschenswert.

Dementsprechend sieht eine vorteilhafte Ausführungsform des Verfahrens vor, dass der Geländeparameter und/oder der Korrekturfaktor einen Wert annehmen, der einer maßstabsgetreuen Darstellung der Höhenwerte entspricht, wenn die Höhenwerte der Geländestellvertretervektoren zu einem bestimmten Bruchteil einen identischen Wert, insbesondere einen Wert auf dem Niveau des Meeresspiegels, aufweisen. Diese Überprüfung kann in einfachster Weise im Rahmen der statistischen Auswertung der Höhenwerte der Geländestellvertretervektoren erfolgen und bildet demnach eine Art Ausnahmeregelung bezüglich des Zusammenhangs zwischen den Höhenwerten der Geländestellvertretervektoren und dem daraus abgeleiteten Geländeparameter

Um eine möglichst stetige Anpassung der jeweils zu erzeugenden und darzustellenden Terrainkartenansicht an die lokalen bzw. darzustellenden Verhältnisse des Geländes zu ermöglichen, wird gemäß einer vorteilhaften Ausführungsform vorgesehen, dass der Geländeparameter nach jeder, von der Positionsbestimmungseinrichtung festgestellten, Positionsänderung neu bestimmt werden kann. Dadurch kann die Anpassung des Geländeparameters während der Bewegung des Navigationssystems stetig erfolgen und dadurch wiederum eine hochgradig dynamische Überhöhung der jeweils zu erzeugenden und anzuzeigenden Terrainkartenansicht erfolgen. Zudem folgt aus einer möglichst häufigen Bestimmung des Geländeparameters, dass dieser sich eher in geringem Umfang und insbesondere nicht sprunghaft ändert. Dadurch wird gewährleistet, dass, insbesondere bei ansonsten gleichbleibenden Eigenschaften der Terrainkartendarstellung, eine sprunghafte Veränderung zwischen zwei sukzessiven nacheinander erzeugten und dargestellten Terrainkartenansichten ausbleibt, was zur Verwirrung des Benutzers führen könnte. Umgekehrt wird ermöglicht, dass bei aufeinanderfolgenden Terrainkartendarstellungen die Überhöhung geringfügig angepasst wird, ohne dass dies für den Benutzer augenscheinlich wird.

Andererseits ist durch die Neubestimmung des Geländeparameters in Abhängigkeit einer Positionsänderung jedoch auch gegeben, dass bei Stillstand des Navigationssystems, wie beispielsweise in einem Stau oder an einer Ampel, bei dem die Positionsbestimmungseinrichtung keine Positionsänderung feststellt, die Geländeparameter nicht neu berechnet werden müssen und somit wertvolle Rechenressourcen des Navigationssystems eingespart werden können.

Eine wichtige Größe, die einen bestimmenden Einfluss auf die Darstellung einer Terrainkartenansicht ausübt und welche mittels des Darstellungsparameters Eingang in den Korrekturfaktor und damit in die dynamische Veränderung der Höhenwerte mittels der zumindest einen Umformungsvorschrift bzw. Überhöhung der Terrainkartenansicht finden kann, ist die geographische Auflösung der zu erzeugenden bzw. darzustellenden Kartenansicht. Deshalb ist nach einer vorteilhaften Ausführungsform des erfindungsgemäßen Verfahrens vorgesehen, dass der Darstellungsparameter in Abhängigkeit von der geographischen Auflösung der zu erzeugenden Terrainkartenansicht bestimmt wird.

Stellt eine Terrainkartenansicht in ihrer horizontalen Ausdehnung in zumindest einer Richtung, beispielsweise in Fortbewegungsrichtung des Navigationssystems, einige Kilometer des tatsächlichen geographischen Gebiets anhand der digitalen Karte dar, so werden bei einer maßstabsgetreuen Darstellung von vertikalen Längen oder Abständen bzw. bei einer maßstabsgetreuen Darstellung des Geländeprofils nur extreme Höhenunterschiede wahrgenommen.

Beträgt beispielsweise die vertikale Ausdehnung einer Terrainkartenansicht 10km des tatsächlichen, geographischen Gebiets, so werden Höhenunterschiede des Geländes von ca. 300m ohne überhöhte Darstellung vom Betrachter nicht mehr als Höhenunterschied wahrgenommen. Daher ist es besonders vorteilhaft, wenn bei steigender geographischer Auflösung eine gesteigerte Überhöhung der Höhenwerte, und umgekehrt, vorgenommen wird. Da die Überhöhung mit dem Korrekturfaktor und dieser wiederum mit dem Darstellungsparameter verknüpft sein kann, sieht eine weitere Ausführungsvariante vor, dass der Darstellungsparameter zumindest teilweise mittels einer direkten Proportionalität mit der geographischen Auflösung der zu erzeugenden Terrainkartenansicht verknüpft wird, wobei der Darstellungsparameter bevorzugt in einem einseitig offenen Intervall definiert ist, welches durch einen Minimalwert begrenzt wird.

Zur Erzeugung und Ausgabe von Terrainkartenansichten, die dem Benutzer eine schnelle und leichte Orientierung bzw. Identifizierung und Entnahme von Informationen erlaubt, ist es besonders vorteilhaft, wenn die geographische Auflösung der zu erzeugenden Terrainkartenansicht in Abhängigkeit von der horizontalen Geschwindigkeit des Navigationssystems bestimmt wird. Alternativ zur Bestimmung der Horizontalgeschwindigkeit mittels einer Bestimmung der zeitlichen Änderung der jeweils aktuellen Position kann auch die Bestimmung über spezielle Geschwindigkeitssensoren des Navigationssystems vorgesehen sein.

Da der Darstellungsparameter auch von der aktuellen Horizontalgeschwindigkeit des Navigationssystems abhängen kann, ist es für eine möglichst dynamische Anpassung der Höhenwerte der zu erzeugenden und darzustellenden Terrainkartenansicht anhand einer dynamischen Anpassung des Darstellungsparameters für das Verfahren vorgesehen, dass der Darstellungsparameter nach jeder, von der Positionsbestimmungseinrichtung festgestellten Positionsänderung, neu bestimmt werden kann.

Für eine möglichst dynamische Bestimmung des Korrekturfaktors ist es besonders vorteilhaft, wenn dieser in Abhängigkeit von der aktuellen Position bestimmt wird, wobei der Korrekturfaktor nach jeder, von der Positionsbestimmungseinrichtung festgestellten Positionsänderung neu bestimmt werden kann. Mit anderen Worten ausgedrückt bedeutet dies, dass eine besonders gute Korrektur der Höhenwerte der zur Erzeugung einer Terrainkartenansicht in die Darstellungserzeugungseinrichtung geladenen Vektoren dadurch erreicht wird, dass die in Abhängigkeit der aktuellen Position jeweils bestimmten Geländeparameter und/oder Darstellungsparameter zur Bestimmung des Korrekturfaktors herangezogen werden. Damit kann nach jeder Positionsänderung die Korrektur der Höhenwerte an die jeweils geänderten Eigenschaften der zu erzeugenden Terrainkartenansicht angepasst werden. Damit wird ermöglicht, dass sich die Terrainkartenansichten, insbesondere bei einer geringen Ausgaberate, durch einen zu stark veränderten Korrekturfaktor nicht zu stark voneinander unterscheiden, wodurch der Benutzer verwirrt werden könnte.

Um zu verhindern, dass durch die Veränderung der Höhenwerte durch den Korrekturfaktor anhand einer Umformungsvorschrift eine Unterhöhung, also eine verringerte Ausprägung von Höhenunterschieden oder eine negative Überhöhung, also eine umgekehrte Darstellung von Erhöhungen und Vertiefungen, erfolgt, ist es besonders vorteilhaft, wenn der Korrekturfaktor in einem einseitig offenen Intervall definiert ist, welches durch einen Minimalwert begrenzt wird, wobei der Minimalwert des Korrekturfaktors einer maßstabsgetreuen Darstellung der Höhenwerte entspricht. Dabei ist insbesondere vorgesehen, dass diese Definition des Korrekturfaktors Vorrang vor einer etwaigen Bestimmung des Korrekturfaktors anhand des Geländeparameters und/oder des Darstellungsparameters hat. Mit anderen Worten ausgedrückt bedeutet dies, dass der Korrekturfaktor zumindest immer dann den Minimalwert annimmt, wenn der anhand von Geländeparameter und/oder Darstellungsparameter bestimmte Korrekturfaktor geringer ist als der Minimalwert des Korrekturfaktors. Dies kann dementsprechend als Vorsichtsmaßnahme angesehen werden, die verhindert, dass in Ausnahmefällen der anhand von Darstellungsparameter und Geländeparameter berechnete Korrekturfaktor zu einer nicht gewünschten Veränderung der Höhenwerte der Vektoren führt.

Die Art der Umformung, die mittels der zumindest einen Umformungsvorschrift, welche die Umformung der Höhenwerte unter Einbeziehung des Korrekturfaktors vorsieht, durchgeführt wird, ist grundsätzlich beliebig. Stellt jedoch der Korrekturfaktor einen Überhöhungsfaktor bezüglich vertikaler Längen bzw. Höhenwerte dar, so ist es besonders vorteilhaft, wenn die zumindest eine Umformungsvorschrift der Kartenansichtbetriebsart zum Erzeugen einer vogelperspektivischen Terrainkartenansicht die Multiplikation der Höhenwerte der Vektoren mit dem Korrekturfaktor vorsieht. Dadurch wird eine einheitliche, schnelle und effiziente Umformung der Vektoren ermöglicht.

Verschiedene Aspekte der Erfindung sind in den Zeichnungen schematisiert dargestellt und werden nachfolgend beispielhaft erläutert.

Es zeigen:
- Fig. 1: Abhängigkeit zwischen der Standardabweichung der Höhenwerte der Geländestellvertretervektoren und dem Geländeparameter gemäß einer ersten Ausführungsform;
- Fig. 2: Abhängigkeit zwischen der Standardabweichung der Höhenwerte der Geländestellvertretervektoren und dem Geländeparameter gemäß einer zweiten Ausführungsform;
- Fig. 3: Abhängigkeit zwischen der geographischen Auflösung einer zu erzeugenden Terrainkartenansicht und dem Darstellungsparameter gemäß einer ersten Ausführungsform;
- Fig. 4: Abhängigkeit zwischen der geographischen Auflösung einer zu erstellenden Terrainkartenansicht und dem Darstellungsparameter gemäß einer zweiten Ausführungsform;
- Fig. 5: Beispielhafte Bestimmung des Geländeparameters für zwei verschiedene darzustellende Gelände;
- Fig. 6: Beispielhafte Bestimmung des Darstellungsparameters anhand zweier unterschiedlicher geographischer Auflösungen;
- Fig. 7a: schematisierte Darstellungen einer mit dem erfindungsgemäßen Verfahren erzeugten Terrainkartenansicht eines bergigen Geländes;
- Fig. 7b: Schematisierte Darstellung einer nach dem Stand der Technik erzeugten Terrainkartenansicht eines bergigen Geländes;
- Fig. 8a: Schematisierte Darstellung einer mit dem erfindungsgemäßen Verfahren erzeugten Terrainkartenansicht eines hauptsächlich flachen Geländes;
- Fig. 8b: Schematisierte Darstellung einer nach dem Stand der Technik erzeugten Terrainkartenansicht eines im Wesentlichen flachen Geländes.

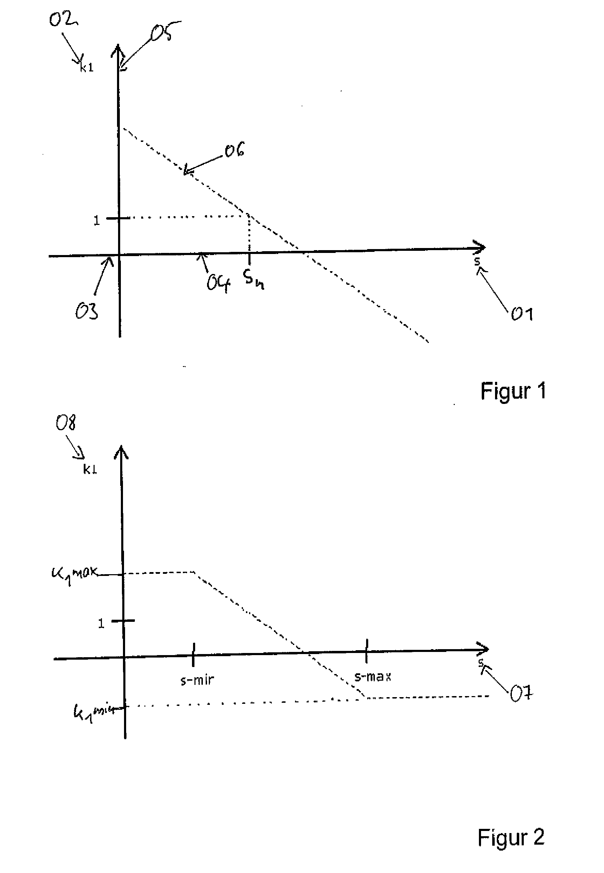

Fig. 1 zeigt einen beispielhaften Zusammenhang zwischen einer Standardabweichung (s) 01 und dem Geländeparameter (k1) 02. Der Zusammenhang ist anhand eines Graphen 03 dargestellt, bei dem die Standardabweichung 01 auf der Abszissenachse 04 und der Geländeparameter 02 auf der Ordinatenachse 05 aufgetragen ist. Die Standardabweichung 01 ist dabei die Standardabweichung der Höhenwerte der in die Darstellungserzeugungseinrichtung geladenen, als Geländestellvertretervektoren ausgewählten Vektoren. Dem Geländeparameter 02 wird anhand der Standardabweichung 01 eine reelle Zahl zugeordnet, wobei die Zuordnung über die lineare Abhängigkeit 06 zwischen den beiden Größen Standardabweichung 01 und Geländeparameter 02 erfolgt.

Wird beispielhaft angenommen, dass der Korrekturfaktor mit den Höhenwerten der Vektoren der zu erzeugenden Terrainkartenansicht mittels der zumindest einen Umformungsvorschrift multipliziert wird und wird beispielhaft weiter angenommen, dass der Korrekturfaktor lediglich vom Geländeparameter 02 abhängt, so kann der Zusammenhang zwischen der Standardabweichung 01 und dem Geländeparameter 02, wie in Fig. 1 dargestellt, wie folgt interpretiert werden. Je größer die Standardabweichung 01, desto größer sind die Höhenunterschiede der Höhenwerte der analysierten Geländestellvertretervektoren. Demnach verringert sich mit zunehmender Unebenheit des Geländes bzw. mit zunehmender Standardabweichung 01 der Geländeparameter 02.

Für Standardabweichungen 01, die kleiner sind als die neutrale Standardabweichung sₙ, erfolgt eine Überhöhung der Höhenwerte, wenn der Korrekturfaktor direkt und nur mit dem Geländeparameter verknüpft ist. Für Standardabweichungen, die größer sind als die neutrale Standardabweichung sₙ, erfolgt eine Unterhöhung bzw. negative Unterhöhung oder Überhöhung. Diese zuletzt genannten, für die tatsächliche Erzeugung bzw. Darstellung von Terrainkartenansichten unerwünschten Effekte werden im erfindungsgemäßen Verfahren durch die Abhängigkeit des Korrekturfaktors von Geländeparameter und Darstellungsparameter sowie durch die vorteilhafte Definition des Korrekturfaktors selbst verhindert. Grundsätzlich ist die Möglichkeit, einen Geländeparameter mit Werten kleiner 1 zuzulassen, jedoch durchaus gewollt, da hierdurch ermöglicht wird, dass sich die Einflüsse von Geländeparameter und Darstellungsparameter gegenseitig ausgleichen bzw. aufheben.

In Fig. 2 ist eine leichte Abwandlung der Abhängigkeit zwischen der Standardabweichung 07 und dem Geländeparameter 08 dargestellt. Für Standardabweichungen 07, die geringer sind als die Standardabweichung Sₘᵢₙ, bleibt der Geländeparameter 08 auf einem konstanten Niveau k1ₘₐₓ. Für Standardabweichungen 07, die größer sind als Sₘₐₓ hingegen, nimmt der Geländeparameter 08 den konstanten Wert k1ₘᵢₙ an. Eine derartige beidseitige Beschränkung des Werts des Geländeparameters hat sich in der Praxis als besonders vorteilhaft herausgestellt.

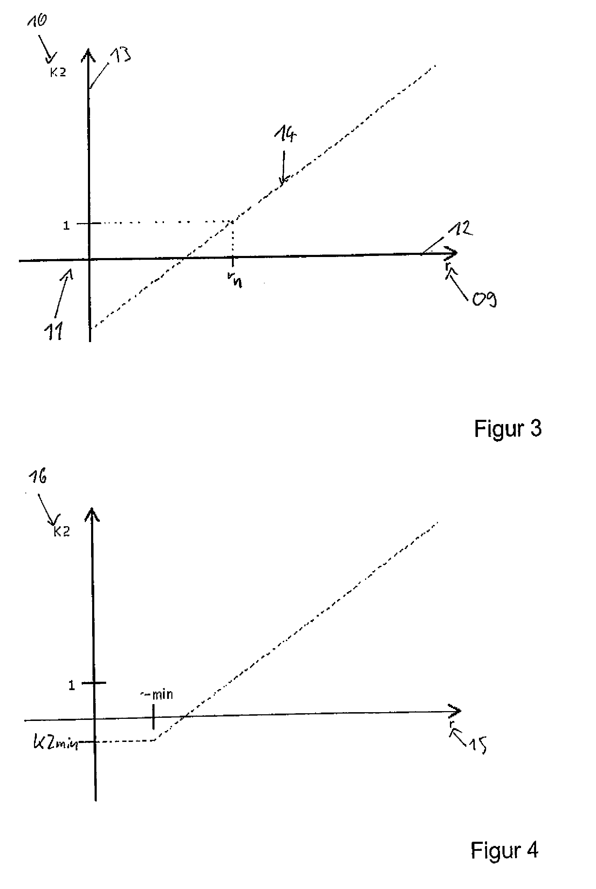

Fig. 3 zeigt beispielhaft den Zusammenhang zwischen der geographischen Auflösung (r) 09 und dem Darstellungsparameter (k2) 10. In dem Graphen 11 ist die geographische Auflösung 09 auf der Abszissenachse 12 und der Darstellungsparameter 10 auf der Ordinatenachse 13 aufgetragen. Die geographische Auflösung 09 ist dabei so definiert, dass die geographische Auflösung 09 mit steigender Größe des darzustellenden Kartenausschnitts ebenfalls ansteigt. Eine weite Übersichtskartenansicht repräsentiert dementsprechend eine relativ große geographische Auflösung 09, wohingegen eine detailreiche Kartenansicht der näheren Umgebung eine relativ kleine geographische Auflösung 09 aufweist. Über die lineare Verknüpfung 14 bzw. die lineare Abbildung der geographischen Auflösung 09 mit dem Darstellungsparameter 10 kann der jeweiligen, zu erzeugenden bzw. darzustellenden Terrainkartenansicht ein Darstellungsparameter 10 anhand der geographischen Auflösung 09 zugewiesen werden.

Hier soll nun ebenfalls beispielhaft angenommen werden, dass die Verknüpfung zwischen den Höhenwerten der Vektoren und dem Korrekturvektor durch eine Multiplikation gegeben ist und dass beispielhaft der Korrekturfaktor lediglich vom Darstellungsparameter 10 abhängt. Demnach führen geographische Auflösungen 09, die größer sind als die neutrale geographische Auflösung rₙ, zu einer Überhöhung der Höhenwerte, wohingegen geographische Auflösungen, die kleiner sind als rₙ, zu Unterhöhungen, negativen Unterhöhungen oder gar negativen Überhöhungen führen. Für die Unterhöhung, negative Unterhöhung und negative Überhöhung gilt die bereits in der Beschreibung der Fig. 1 erfolgte Argumentation bezüglich der Ausgleichsmöglichkeit für einen zu bestimmenden Korrekturfaktor in Kombination mit einem Geländeparameter

In Fig. 4 ist eine leicht abgewandelte Abhängigkeit zwischen der geographischen Auflösung 15 und dem Darstellungsparameter 16 bezüglich der Fig. 3 dargestellt. Diese Abwandlung, bei der geographischen Auflösungen 15, die kleiner sind als die geographische Auflösung rₘᵢₙ, ein konstanter Darstellungsparameter k2ₘᵢₙ zugewiesen wird, hat sich ebenfalls in der Praxis als besonders vorteilhaft erwiesen.

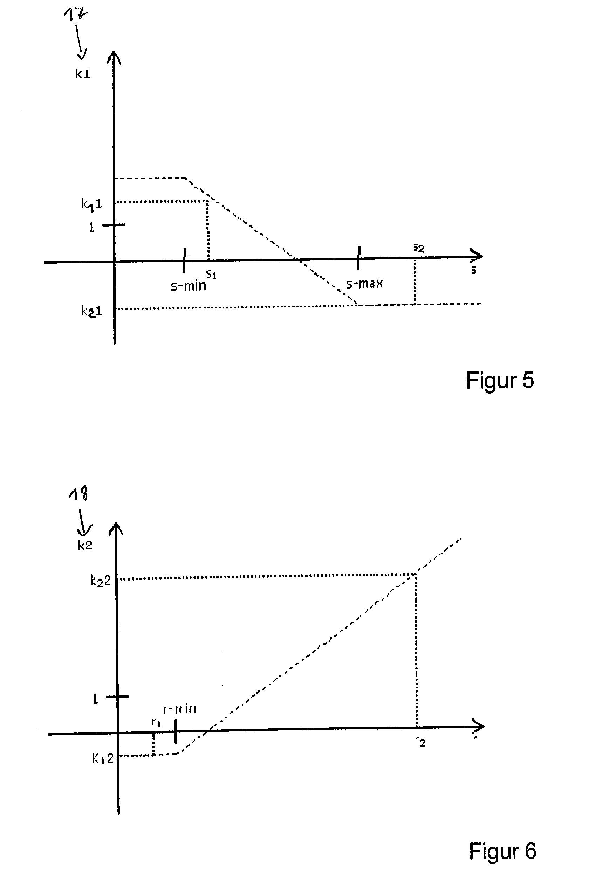

In Fig. 5 und Fig. 6 soll anhand zweier beispielhafter Situationen der jeweilige Einfluss auf den Geländeparameter (k1) 17 und den Darstellungsparameter (k2) 18 und die daraus resultierenden Folgen für den Korrekturfaktor erläutert werden. Die jeweiligen Abhängigkeiten entsprechen dabei denen der Figuren 2 und 4. Eine erste Situation, die im Folgenden mit dem Index 1 gekennzeichnet wird, stellt die Situation der Erzeugung einer vogelperspektivischen Terrainkartendarstellung dar, in der sich das Navigationssystem mit relativ geringer Geschwindigkeit durch ein verhältnismäßig flaches Gelände bewegt.

Die Auswertung der Höhenwerte der Geländestellvertretervektoren in der ersten Situation führt zu der Standardabweichung s₁, welche wiederum dem Geländeparameter k₁1 zugeordnet wird. Dieser Geländeparameter k₁ 1 würde für sich genommen zu einer Erhöhung der Höhenwerte führen und damit auch geringe Höhenunterschiede in der zu erzeugenden Terrainkartenansicht sichtbar machen. Durch die relativ geringe Geschwindigkeit des Navigationssystems in der ersten Situation, welche eine geringe geographische Auflösung r₁ der zu erzeugenden Terrainkartenansicht verursacht, wird dem Darstellungsparameter k₁2 in der ersten Situation der Minimalwert des Darstellungsparameters k2ₘᵢₙ zugeordnet. Gemäß einer bevorzugten Ausführungsform des Verfahrens wird der Korrekturfaktor als Summe aus Darstellungsparameter und Geländeparameter bestimmt. Entsprechend ergibt sich für die erste Situation ein Korrekturfaktor (k) durch k₁=k₁1+k₁2. Qualitativ bedeutet dies also, dass eine etwaige, durch den Geländeparameter befürwortete Überhöhung der darzustellenden Terrainkartenansicht aufgrund des negativen Darstellungsparameters, welcher durch die geringe geographische Auflösung bzw. die geringe Geschwindigkeit verursacht wird, abgeschwächt bzw. aufgehoben wird.

In der zweiten Situation, die in Fig. 5 und Fig. 6 dargestellt ist und die im Folgenden in den Figuren 5 und 6 mit dem Index 2 versehen wird, soll angenommen werden, dass sich das Navigationssystem mit großer Geschwindigkeit durch ein bergiges Gelände bewegt. Aufgrund der Unebenheit des darzustellenden Geländes liefert die Analyse der Höhenwerte der Geländestellvertretervektoren eine relativ hohe Standardabweichung s₂, die zu einem minimalen Geländeparameter k₂1 führt. Wie Fig. 6 entnommen werden kann, bedingt die relativ hohe Fortbewegungsgeschwindigkeit eine hohe geographische Auflösung r₂ und damit einen relativ hohen Wert des Darstellungsparameters k₂2. Eine qualitative Betrachtung des sich in der zweiten Situation ergebenden Korrekturfaktors k als Summe des Geländeparameters k₂1 aus Fig. 5 und des Darstellungsparameters k₂2 aus Fig. 6 ergibt, dass trotz des an sich schon recht unebenen Geländes der Situation 2 eine deutliche Überhöhung der Höhenwerte der Vektoren mittels der Umformung mit dem Korrekturfaktor k erfolgt. Dies ist hauptsächlich dem Umstand geschuldet, dass aufgrund der großen geographischen Auflösung r₂, welche durch die hohe Fortbewegungsgeschwindigkeit zustande kommt, auch relativ große, tatsächliche Höhenunterschiede in dem Gelände der zweiten Situation nicht mehr sichtbar werden, wodurch auch für ein bereits an sich unebenes Gelände eine Überhöhung sinnvoll ist.

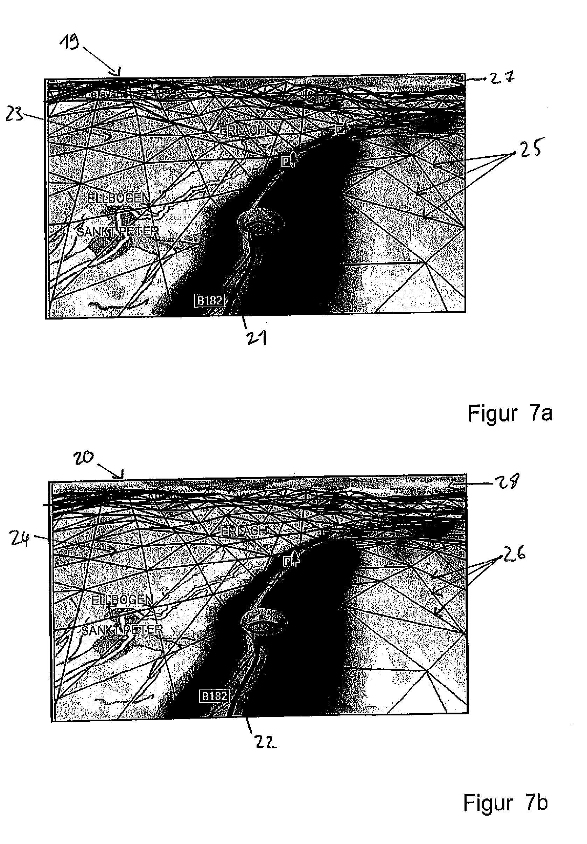

In den Fig. 7a und 7b sind schematische Terrainkartenansichten 19 und 20 der jeweils identischen Situationen dargestellt. In der Situation bewegt sich das Navigationssystem entlang einer Passstraße 21, 22 durch ein alpines Gelände 23, 24. In Fig. 7b ist dabei eine Terrainkartenansicht 20 dargestellt, die ein bekanntes maßstabsgetreues Verhältnis zwischen vertikalen und horizontalen Längen vorsieht. In Fig. 7a hingegen ist eine Terrainkartenansicht 19 dargestellt, die nach dem erfindungsgemäßen Verfahren erzeugt wurde. Mit anderen Worten ausgedrückt bedeutet dies, dass in der Terrainkartenansicht der Fig. 7a eine dynamische bzw. individuelle Anpassung der Höhenwerte der Vektoren stattgefunden hat.

Zur besseren Veranschaulichung der sich ergebenden Geländeprofile der Terrainkartenansichten 19, 20 der Fig. 7a und 7b ist jeweils ein Gitternetz 25, 26 aufgespannt, welches die benachbarten Enden der Vektoren zur Beschreibung des geographischen Gebiets miteinander verbindet. Aus dem Vergleich der Fig. 7a mit der Fig. 7b, insbesondere durch Vergleich der horizontnahen Bereiche 27, 28 der Terrainkartenansichten 19, 20, ist erkenntlich, dass in Fig. 7a eine leichte Überhöhung der Vektoren erfolgt ist. Dadurch wird die Darstellung im bergigen bzw. alpinen Charakter des darzustellenden Geländes 23 eher gerecht als die Darstellung in Fig. 7b.

Dass die Überhöhung jedoch insgesamt relativ gering gegenüber der maßstabsgetreuen Darstellung ausfällt, liegt an der starken Unebenheit des darzustellenden Geländes 23, 24 und dem dadurch bedingten Geländeparameter. Denn nur aufgrund der relativ großen geographischen Auflösung der dargestellten Terrainkartenansichten 19, 20 wäre mit einer beträchtlichen Überhöhung der Vektoren zu rechnen. In der Berücksichtigung des jeweiligen Geländes 23, 24 und der jeweiligen geographischen Auflösung bei der Erzeugung und Darstellung von Terrainkartenansichten 19, 20 und deren gegenseitige Beeinflussungsmöglichkeiten liegt demnach ein großer Vorteil des erfindungsgemäßen Verfahrens. Dies ist in der Fig. 7a dadurch erkennbar, dass die nicht unerheblichen Höhenunterschiede des darzustellenden Geländes 23 gut erkennbar sind, wobei trotz einer relativ großen geographischen Auflösung die Übersichtlichkeit bzw. die Möglichkeit der Informationsentnahme, beispielsweise durch eine übermäßige Überhöhung, nicht beeinträchtigt wird.

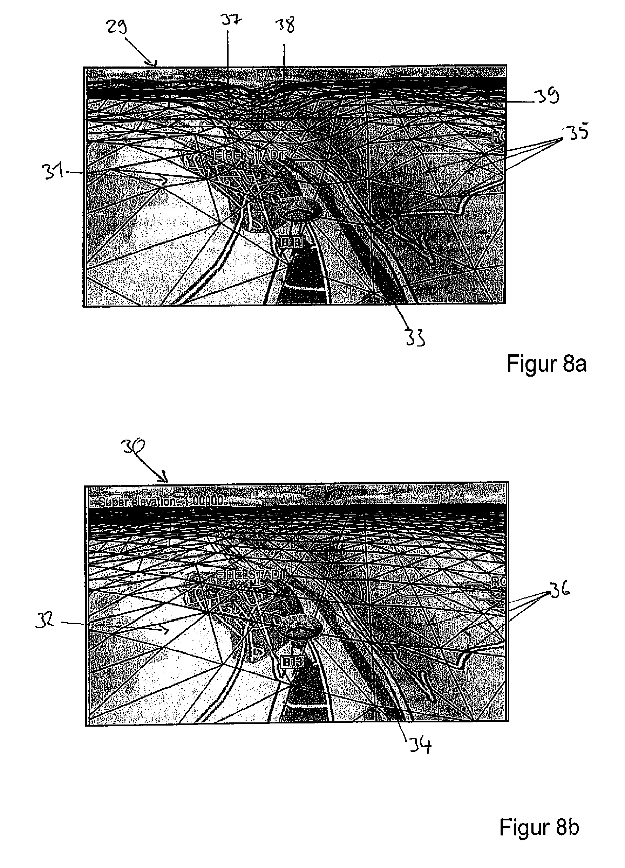

In den Fig. 8a und 8b sind ebenfalls vogelperspektivische Terrainkartenansichten 29, 30 der identischen Situation dargestellt. Bei der dargestellten Situation bewegt sich das Navigationssystem mit relativ hoher Geschwindigkeit durch ein durchaus unebenes Gelände 31, 32 entlang eines Flusslaufs 33, 34. Die Nachteile der maßstabsgetreuen Darstellung bezüglich horizontaler und vertikaler Längen der Fig. 8b treten im Vergleich mit der erfindungsgemäß erzeugten Terrainkartenansicht 29 der Fig. 8a deutlich zutage. Zur besseren Veranschaulichung der dargestellten Höhenprofile sind in den Fig. 8a und 8b ebenfalls Netzstrukturen 35, 36 enthalten, die die Enden der benachbarten Vektoren miteinander verbinden, die das darzustellende Gebiet beschreiben.

In der maßstabsgetreuen Darstellung der Fig. 8b ist trotz der Verdeutlichung der Topographie durch die Netzstruktur 36, die im Regelfall in einer tatsächlich angezeigten Terrainkartenansicht nicht enthalten ist, keinerlei Unebenheit des dargestellten Geländes 32 mehr festzustellen. Dies ist insbesondere der großen geographischen Auflösung geschuldet, wodurch vertikale Höhenunterschiede mit zunehmendem Maße unsichtbar bzw. unkenntlich gemacht werden. Diesem Nachteil begegnet das erfindungsgemäße Verfahren damit, dass allein aufgrund der großen geographischen Auflösung bereits ein relativ großer Darstellungsparameter gewählt wird. Zusammen mit einer mittleren bis geringen Standardabweichung der analysierten Geländestellvertretervektoren, die zu einem relativ hohen Wert des Geländeparameters führen, folgt eine insgesamt deutliche Überhöhung der dargestellten Vektoren. Dadurch wird eine Terrainkartenansicht erzeugt, in der der Benutzer die Topographie leicht und eindeutig erkennt und mit der realen Umgebung dementsprechend einfach vergleichen bzw. in Übereinstimmung bringen kann. Erkenntlich wird dies beispielsweise an den deutlich zu erkennenden Flanken des Flussbetts bzw. Flusstals 37, 38 im horizontnahen Gebiet 39 der erfindungsgemäß erzeugten bzw. dargestellten Terrainkartenansicht 29. Die Flanken 37, 38 sind für den Benutzer mit großer Wahrscheinlichkeit optisch bereits wahrnehmbar und können mittels der Überhöhung der Höhenwerte auch in der Terrainkartenansicht 29 der Fig. 8b erkannt werden. Dies führt letztlich dazu, dass eine vorausschauende Routenführung bzw. eine einfache Informationsentnahme aus den erzeugten und dargestellten Terrainkartenansichten ermöglicht wird.

## Patentansprüche

1. Verfahren zum Betrieb eines Navigationssystems, umfassend eine Kartendatenspeichereinrichtung, in der ein geographisches Gebiet digital mittels einer Vielzahl Vektoren beschrieben ist, wobei die Vektoren zumindest teilweise einen Höhenwert umfassen, zumindest eine Positionsermittlungseinrichtung, mit der die aktuelle Position und/oder eine Positionsänderung des Navigationssystems bestimmt werden kann, eine Darstellungserzeugungseinheit, die zur Erzeugung graphisch darzustellender Inhalte, insbesondere graphischer Kartenansichten eines Teils des in der Kartendatenspeichereinrichtung gespeicherten geographischen Gebiets, eingerichtet ist, wobei die Darstellungserzeugungseinheit in zumindest einer Kartenansichtsbetriebsart betrieben werden kann, die eine dynamische Terrainkartenansicht (19, 20, 29, 30) erzeugt, zumindest eine, insbesondere optische, Anzeigeeinrichtung mittels der zumindest die Anzeige von mittels der Darstellungserzeugungseinheit erzeugten Terrainkartenansichten (19, 20, 29, 30) erfolgen kann,
mit folgenden Verfahrensschritten:
a) Laden zumindest eines Teils der Vektoren aus der Kartedatenspeichereinrichtung in die Darstellungserzeugungseinrichtung;
b) Umformen der Vektoren mittels der Darstellungserzeugungseinrichtung anhand von zumindest einer Umformungsvorschrift, wobei die Umformungsvorschriften von der Kartenansichtsbetriebsart abhängen, wobei für die Kartenansichtsbetriebsart zum Erzeugen einer vogelperspektivischen Terrainkartenansicht (19, 20, 29, 30) zumindest eine Umformungsvorschrift umfasst ist, bei der der Höhenwert von zumindest einem Teil der Vektoren in Abhängigkeit von zumindest einem dynamischen Korrekturfaktor verändert wird;
c) Ausgabe einer, auf Basis zumindest eines Teils der umgeformten Vektoren aufgebauten, Terrainkartenansicht mittels der Anzeigeeinrichtung.

2. Verfahren nach Anspruch 1,
**dadurch gekennzeichnet,**
**dass** das Laden eines Teils der Vektoren aus der Kartedatenspeichereinrichtung in die Darstellungserzeugungseinrichtung in Abhängigkeit von der aktuellen Position und/oder in Abhängigkeit von einer aktuellen Horizontalgeschwindigkeit erfolgt.

3. Verfahren nach Anspruch 1 oder 2,
**dadurch gekennzeichnet,**
**dass** der Korrekturfaktor in Abhängigkeit von einem Darstellungsparameter (10, 16, 18) und/oder einem Geländeparameter (02, 08, 17), insbesondere als Summe aus einem Darstellungsparameter (10, 16, 18) und einem Geländeparameter (02, 08, 17), bestimmt wird.

4. Verfahren nach einem der Ansprüche 1 bis 3,
**dadurch gekennzeichnet,**
**dass** zumindest ein Teil der in die Darstellungserzeugungseinrichtung geladenen Vektoren als Geländestellvertretervektoren zusammengefasst werden.

5. Verfahren nach Anspruch 4,
**dadurch gekennzeichnet,**
**dass** zur Bestimmung des Geländeparameters (02, 08, 17) zumindest eine statistische Auswertung der Höhenwerte der Geländestellvertretervektoren erfolgt.

6. Verfahren nach Anspruch 4 oder 5,
**dadurch gekennzeichnet,**
**dass** zur Bestimmung des Geländeparameters (02, 08, 17) zumindest der Mittelwert und/oder die Varianz und/oder die Standardabweichung der Höhenwerte (1, 7) der Geländestellvertretervektoren berechnet werden.

7. Verfahren nach einem der Ansprüche 3 bis 6,
**dadurch gekennzeichnet,**
**dass** der Geländeparameter (02, 08, 17) mittels einer umgekehrten Proportionalität mit der Standardabweichung der Höhenwerte (1, 7) der Geländestellvertretervektoren verknüpft wird, wobei der Geländeparameter für einen Parameterbereich zwischen einem Minimalwert und einen Maximalwert definiert wird.

8. Verfahren nach einem der Ansprüche 3 bis 7,
**dadurch gekennzeichnet,**
**dass** der Geländeparameter (02, 08, 17) nach jeder, von der Positionsbestimmungseinrichtung festgestellten Positionsänderung neu bestimmt werden kann.

9. Verfahren nach einem der Ansprüche 3 bis 8,
**dadurch gekennzeichnet,**
**dass** der Darstellungsparameter (10, 16, 18) in Abhängigkeit von einer geographischen Auflösung (09, 15) der zu erzeugenden Terrainkartenansicht (19, 20, 29, 30) bestimmt wird.

10. Verfahren nach einem der Ansprüche 3 bis 9,
**dadurch gekennzeichnet,**
**dass** der Darstellungsparameter (10, 16, 18) mittels einer direkten Proportionalität mit der geographischen Auflösung (09, 15) der zu erzeugenden Terrainkartenansicht (19, 20, 29, 30) verknüpft wird, wobei der Darstellungsparameter (10, 16, 18) in einem einseitig offenen Parameterbereich definiert wird, der von einem Minimalwert begrenzt wird.

11. Verfahren nach Anspruch 9 oder 10,
**dadurch gekennzeichnet,**
**dass** die geographische Auflösung (09, 15) der zu erzeugenden Terrainartenansicht (19, 20, 29, 30) in Abhängigkeit von einer aktuellen Horizontalgeschwindigkeit bestimmt wird.

12. Verfahren nach einem der Ansprüche 3 bis 11,
**dadurch gekennzeichnet,**
**dass** der Darstellungsparameter (10, 16, 18) nach jeder, von der Positionsbestimmungseinrichtung festgestellten Positionsänderung neu bestimmt werden kann.

13. Verfahren nach einem der Ansprüche 1 bis 12,
**dadurch gekennzeichnet,**
**dass** der Korrekturfaktor in Abhängigkeit von der aktuellen Position bestimmt wird, wobei der Korrekturfaktor nach jeder, von der Positionsbestimmungseinrichtung festgestellten Positionsänderung neu bestimmt werden kann.

14. Verfahren nach einem der Ansprüche 1 bis 13,
**dadurch gekennzeichnet,**
**dass** der Korrekturfaktor in einem einseitig offenen Intervall bestimmt wird, welches durch einen Minimalwert begrenzt ist.

15. Verfahren nach einem der Ansprüche 1 bis 14,
**dadurch gekennzeichnet,**
**dass** die zumindest eine Umformungsvorschrift der Kartenansichtsbetriebsart zum Erzeugen einer vogelperspektivischen Terrainkartenansicht (19, 20, 29, 30) die Multiplikation der Höhenwerte der Vektoren mit dem Korrekturfaktor vorsieht.
